# DEMANDE DE BREVET EUROPEEN

(11) **EP 1 995 036 A1**
(43) Date de publication de la demande: **26.11.2008**
(21) Numéro de dépôt: 08156502.0
(22) Date de dépôt: 20.05.2008
(51) Int. Cl.: B29C 45/73

(54) **Procédé de refroidissement d'une empreinte d'un moule pour la fabrication de pièces plastiques injectées et empreinte pour la mise en oeuvre dudit procédé**

(30) Priorité: 22.05.2007 FR 0755197
(71) Demandeur: Cad Innov', 67130 Schirmeck (FR)
(72) Inventeur: Wadier, Cédric, 67130 La Broque (FR)
(74) Mandataire: Tetaz, Franck Claude Edouard

(57) **Abrégé**

La présente invention concerne un procédé de refroidissement d'une empreinte (4) d'un moule pour la fabrication d'une pièce plastique injectée caractérisé en ce qu'il consiste à faire circuler un fluide caloporteur dans une pièce dite de refroidissement (3) constitué d'une plaque dont une première face dite d'échange est au contact de l'empreinte (4) et dont la face opposée dite de refroidissement comporte au moins un canal (18) d'écoulement du fluide caloporteur, et un joint (2) venant coiffer la face de refroidissement, ledit joint (2) étant maintenu en position sur la face de refroidissement par une plaque dite porte-joint (1) afin d'assurer l'étanchéité du circuit de refroidissement.

Un autre objet de l'invention concerne un moule pour la fabrication d'une pièce plastique injectée comportant au moins une empreinte (4) et au moins une pièce dite de refroidissement (3) dans laquelle est apte à circuler un fluide caloporteur caractérisé en ce que la pièce de refroidissement (3) consiste en une plaque dont une première face dite d'échange est au contact de l'empreinte (4) et dont la face opposée dite de refroidissement comporte au moins un canal (8) d'écoulement du fluide caloporteur, et en un joint (2) venant coiffer la face de refroidissement, ledit joint (2) étant maintenu en position sur la face de refroidissement par une plaque dite porte-joint (1) afin d'assurer l'étanchéité du circuit de refroidissement.

## Description

La présente invention concerne le domaine des procédés de fabrication de pièces plastiques injectées, et plus particulièrement des procédés de refroidissement de la ou des empreintes d'un moule.

Dans le domaine de l'injection de pièces plastiques, il est bien connu de refroidir les pièces plastiques injectées dans le moule afin d'accélérer la cadence de production, les pièces plastiques ne pouvant être éjectées des moules par des doigts d'éjection que lorsqu'elles sont suffisamment froides.

Afin de refroidir les pièces plastiques, il est usuel de faire circuler un fluide caloporteur, tel que de l'eau par exemple, dans des canaux pratiqués dans les empreintes du moule. On entend par empreinte une pièce en acier inoxydable ou oxydable dans laquelle a été usinée la forme de la pièce plastique. Ces canaux sont généralement réalisés par perçage de l'empreinte.

Plus la pièce plastique est refroidie rapidement, plus le moule peut être cyclé de sorte que la cadence de production dépend directement de la vitesse de refroidissement des pièces. Par ailleurs, chaque pièce plastique doit être suffisamment refroidie dans sa totalité avant éjection du moule afin d'éviter toute déformation et toute détérioration.

Les empreintes comportent généralement des inserts de version et/ou de modification et/ou de réparation ainsi que des zones de regroupement des éjecteurs des pièces plastiques dans lesquels il n'est pas possible de faire passer les canaux de refroidissement ce qui grève le temps de refroidissement des pièces plastiques.

Par ailleurs, il est difficile de réparer une empreinte ou d'apporter des modifications sur une empreinte si la réparation et/ou la modification s'étend au droit des canaux de refroidissement de sorte qu'il est fréquent soit de recourir à une nouvelle empreinte soit à la suppression des canaux de refroidissement soit à une modification du moule tout en conservant des canaux de refroidissement. Ainsi, la réparation ou la modification des empreintes grève le coût de fabrication des pièces plastiques.

On connaît, par ailleurs, la demande de brevet américaine US 2006/0115551 qui décrit un doigt d'éjection d'une pièce dans un moule comportant un corps obtenu dans un matériau hautement thermo-conducteur et une peau extérieure obtenue dans un matériau très solide et résistant aux chocs thermiques et à l'abrasion. LE matériau hautement thermo-conducteur consiste de préférence dans du cuivre et le matériau résistant consiste dans de l'acier par exemple.

Bien que ce doigt d'éjection permette d'améliorer la vitesse de refroidissement des pièces injectées, il reste nécessaire de recourir à une nouvelle empreinte ou de supprimer les canaux de refroidissement ou de modifier de manière coûteuse les empreintes sans supprimer lesdits canaux de refroidissement, lorsqu'il faut réparer une empreinte ou apporter des modifications sur une empreinte si la réparation et/ou la modification s'étend au droit des canaux de refroidissement.

L'un des buts de l'invention est donc de remédier à tous ces inconvénients en proposant un procédé de refroidissement d'une empreinte d'un moule pour la fabrication d'une pièce plastique injectée et moule pour la mise en oeuvre du procédé de conception simple, peu onéreuse et permettant d'apporter des modifications et/ou des réparations au moule sans nécessiter le remplacement ou la modification onéreuse des empreintes du moule.

A cet effet et conformément à l'invention, il est proposé un procédé de refroidissement d'une empreinte d'un moule pour la fabrication d'une pièce plastique injectée caractérisé en ce qu'il consiste à faire circuler un fluide caloporteur dans une pièce dite de refroidissement constitué d'une plaque dont une première face dite d'échange est au contact de l'empreinte et dont la face opposée dite de refroidissement comporte au moins un canal d'écoulement du fluide caloporteur, et un joint venant coiffer la face de refroidissement, ledit joint étant maintenu en position sur la face de refroidissement par une plaque dite porte-joint afin d'assurer l'étanchéité du circuit de refroidissement.

Ladite pièce de refroidissement est obtenue dans un matériau thermo-conducteur et de préférence dans du cuivre.

Par ailleurs, le fluide caloporteur est de préférence de l'eau.

Un autre objet de l'invention concerne un moule pour la fabrication d'une pièce plastique injectée comportant au moins une empreinte et au moins une pièce dite de refroidissement dans laquelle est apte à circuler un fluide caloporteur caractérisé en ce que la pièce de refroidissement consiste en une plaque dont une première face dite d'échange est au contact de l'empreinte et dont la face opposée dite de refroidissement comporte au moins un canal d'écoulement du fluide caloporteur, et en un joint venant coiffer la face de refroidissement, ledit joint étant maintenu en position sur la face de refroidissement par une plaque dite porte-joint afin d'assurer l'étanchéité du circuit de refroidissement

La pièce de refroidissement est obtenue dans un matériau thermo-conducteur et de préférence dans du cuivre.

Accessoirement, le moule comporte au moins un insert traversant la pièce de refroidissement et l'empreinte, ledit insert étant en contact intime avec la pièce de refroidissement.

D'autres avantages et caractéristiques ressortiront mieux de la description qui va suivre de plusieurs variantes d'exécution, données à titre d'exemples non limitatifs, du procédé de refroidissement d'un moule et du moule pour la mise en oeuvre du procédé conforme à l'invention, à partir des dessins annexés sur lesquels :
- la figure 1 est une vue en perspective éclatée, vue de dessus, du moule suivant l'invention
- la figure 2 est une vue en perspective éclatée, vue de dessous, du moule suivant l'invention représentée sur la figure 1
- la figure 3 est une vue en perspective éclatée, vue de dessus, d'une variante d'exécution du moule suivant l'invention,
- la figure 4 est une vue en perspective éclatée, vue de dessous, de la variante d'exécution du moule représentée sur la figure 3,
- la figure 5 est une vue en perspective éclatée, vue de dessus, d'une seconde variante d'exécution du moule suivant l'invention,
- la figure 6 est une vue en perspective de dessus de la seconde variante d'exécution du moule suivant l'invention représentée sur la figure 5.

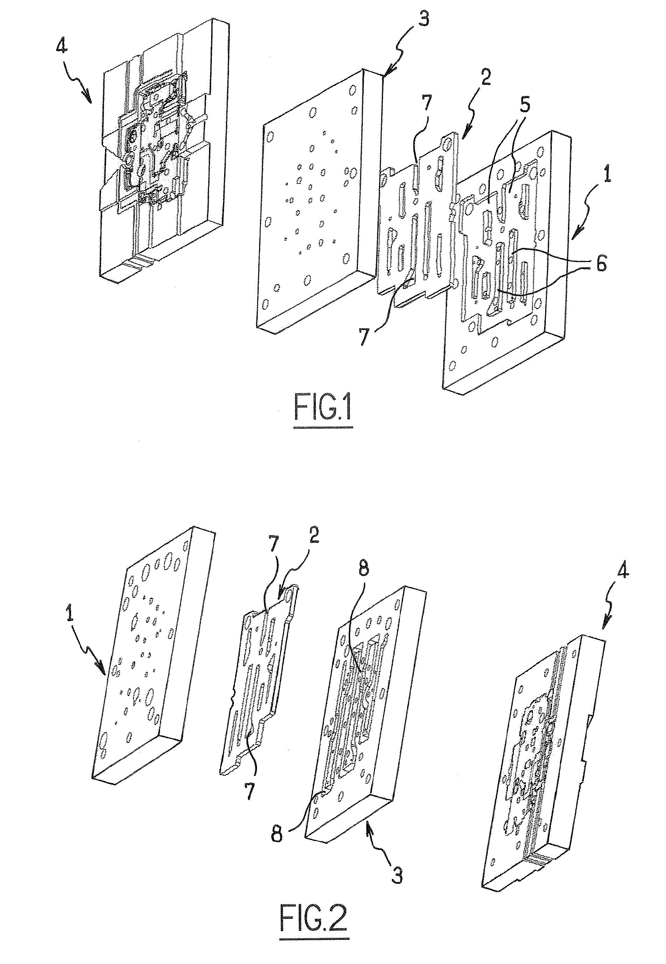

En référence aux figures 1 et 2, le moule suivant l'invention comporte une plaque porte joint 1, un joint 2 et une plaque de refroidissement 3 venant au contact d'une empreinte 4 du moule, ladite plaque porte joint 1, le joint 2, la plaque de refroidissement 3 et l'empreinte 4 étant assemblé par des vis de serrage non représentées sur les figures.

Dans cet exemple particulier de réalisation, la plaque porte joint 1 présente une forme rectangulaire munie sur sa face supérieure de gorges 5 dans lesquelles vient se loger le joint 2 lesdites gorges 5 présentant une profondeur légèrement inférieure à l'épaisseur du joint 2. Ces gorges 5 sont réalisées par fraisage de la face supérieure de la plaque porte joint 1, cette dernière étant obtenue dans de l'acier inoxydable par exemple afin d'éviter sa corrosion.

Par ailleurs, afin d'éviter tout mouvement relatif entre la plaque porte joint 1, le joint 2 et la plaque de refroidissement 3, ladite plaque porte joint 1 comporte des plots 6 de maintien aptes à s'étendre dans des trous traversants 7 du joint 2, les extrémités distales des plots prenant appui sur la face de la plaque de refroidissement 3.

On observera que la plaque porte joint 1 peut présenter une épaisseur quelconque.

Le joint 2 est obtenu dans un matériau apte à se déformer par écrasement. Ledit joint 2 est par exemple obtenu dans un polymère apte à s'écraser lors du serrage des vis d'assemblage du moule. Le joint 2 présente une forme également rectangulaire présentant des dimensions légèrement supérieure à celles de la plaque porte joint 1 et une épaisseur de 3mm par exemple. De préférence, le joint 2 présente une longueur et/ou une largeur supérieure de 0,2 à 0,4 mm à celles de la plaque porte joint 1 afin de permettre son fluage lors de l'écrasement procurer par l'assemblage du porte joint 1, du joint 2 et de la plaque de refroidissement 3 sur l'empreinte 4.

La plaque de refroidissement 3 présente une forme globalement rectangulaire apte à coiffer la plaque porte joint 1 et est obtenue dans un matériau thermo conducteur tel qu'un alliage de cuivre par exemple. Ladite plaque de refroidissement 3 comporte sur sa face inférieure, c'est-à-dire sur sa face s'étendant au droit de la face du porte joint 1 munie de gorges 5, des gorges 8 en forme générale de serpentin pour former des canaux d'écoulement du fluide caloporteur lorsque la plaque porte joint 1, le joint 2 et la plaque de refroidissement 3 sont assemblés sur l'empreinte 4. Lesdites gorges 8 sont obtenues par fraisage de la face inférieure de ladite plaque de refroidissement 3 de telle manière que la distance séparant la face inférieure de l'empreinte 4, en contact avec la face supérieure de la plaque de refroidissement 3, du fond desdites gorges 8 de la plaque de refroidissement 3 soit inférieure ou égale à 5mm.

On observera que les extrémités distales des plots 6 prennent appui sur la face inférieure de la plaque de refroidissement 3, entre les gorges 8 des canaux d'écoulement du fluide caloporteur.

Il est bien évident que la plaque de refroidissement 3 peut comporter une ou plusieurs gorges 8 sans pour autant sortir du cadre de l'invention.

Par ailleurs, il va de soi que le dimensionnement des gorges 5 de la plaque porte joint 1 et des gorges 8 de la plaque de refroidissement 3 sera aisément adapté par l'Homme du Métier en fonction du débit du fluide caloporteur mais également en fonction des températures d'injection de la matière plastique, des dimensions de la pièce injectée, etc...

On notera que la plaque de refroidissement 3 sera obtenue de préférence dans un alliage apte à supporter les contraintes de compression appliquées sur le moule à chaque cycle. Cet alliage pourra consister par exemple dans tout alliage acier XDBD.X commercialisé par la société Aubert et Duval, dans un alliage de cuivre tel que l'alliage Ampcoloy 972 commercialisé par la société AMPCO, dans du bronze, etc...

De plus, ladite plaque de refroidissement 3 est obtenue suivant un procédé permettant d'éliminer les déformations de ladite plaque après usinage.

Le procédé consiste à réaliser un lopin ou billette comportant une surépaisseur d'environ 1 mm sur chacune de ses faces. On entend par lopin un bloc de métal débité dans un demi-produit ou une barre, et dont le volume correspond à celui de la pièce à obtenir, majoré de celui nécessaire au forgeage.

Préalablement à son usinage pour la réalisation des canaux de refroidissement notamment, on applique un traitement thermique audit lopin en le plaçant dans un four à une température comprise entre 290 et 400°C pendant une durée comprise entre 2 et 4 heures.

Ledit lopin est ensuite usiné en laissant une surépaisseur d'environ 0.5 mm sur chacune de ses faces puis on applique un second traitement thermique audit lopin qui est placé dans un four à une température comprise entre 140 et 240°C pendant une durée comprise entre 3 et 6 heures.

Finalement, le lopin est usiné une dernière fois pour obtenir la plaque de refroidissement aux côtes souhaitées.

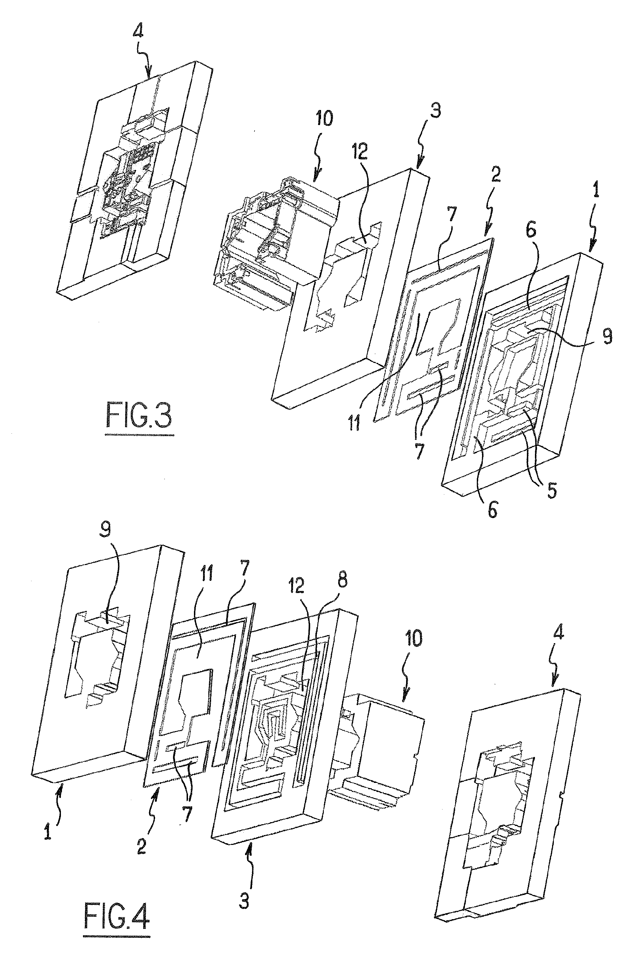

Selon une première variante d'exécution du moule suivant l'invention, en référence aux figures 3 et 4, ledit moule comporte de la même manière que précédemment une plaque porte joint 1, un joint 2 et une plaque de refroidissement 3 venant au contact d'une empreinte 4 du moule, ladite plaque porte joint 1, le joint 2, la plaque de refroidissement 3 et l'empreinte 4 étant assemblés par des vis de serrage non représentées sur les figures.

Ladite plaque porte joint 1 présente une forme rectangulaire et comporte un évidement central 9 dans lequel est apte à s'étendre un ou plusieurs inserts 10.

De plus, la plaque porte joint 1 est munie sur sa face supérieure (figure 3) de gorges 5 dans lesquelles vient se loger le joint 2, lesdites gorges 5 s'étendant sur toute la surface de la face supérieure de la plaque porte joint 1 autour de l'évidement central 9 suivant une profondeur légèrement inférieure à l'épaisseur du joint 2. Ces gorges 5 sont réalisées par fraisage de la face supérieure de la plaque porte joint 1, cette dernière étant obtenue dans de l'acier inoxydable par exemple afin d'éviter sa corrosion.

Par ailleurs, afin d'éviter tout mouvement relatif entre la plaque porte joint 1, le joint 2 et la plaque de refroidissement 3, ladite plaque porte joint 1 comporte des plots 6 de maintien aptes à s'étendre dans des trous traversants 7 du joint 2, les extrémités distales des plots 6 prenant appui sur la face inférieure de la plaque de refroidissement 3.

Le joint 2 est obtenu de la même manière que précédemment dans un matériau apte à se déformer par écrasement. Ledit joint 2 est par exemple obtenu dans un polymère apte à s'écraser lors du serrage des vis d'assemblage du moule. Le joint 2 présente une forme également rectangulaire présentant des dimensions légèrement supérieure à celles de la plaque porte joint 1 et une épaisseur de 3 mm par exemple. De plus, le joint 2 comporte un évidement central 11 dans lequel est apte à s'étendre le ou les inserts 10. De préférence, le joint 2 présente une longueur et/ou une largeur supérieure de 0,2 à 0,4 mm à celles de la plaque porte joint 1 afin de permettre son fluage lors de l'écrasement procurer par l'assemblage du porte joint 1, du joint 2 et de la plaque de refroidissement 3 sur l'empreinte 4.

La plaque de refroidissement 3 présente une forme globalement rectangulaire apte à coiffer la plaque porte joint 1 et est obtenue dans un matériau thermo conducteur tel qu'un alliage de cuivre par exemple. De plus, la plaque de refroidissement 3 comporte un évidement central 12 dans lequel est apte à s'étendre le ou les inserts 10. Ladite plaque de refroidissement 3 comporte sur sa face inférieure, c'est-à-dire sur sa face s'étendant au droit de la face du porte joint 1 munie de gorges 5, des gorges 8 en forme générale de serpentin pour former des canaux d'écoulement du fluide caloporteur lorsque la plaque porte joint 1, le joint 2 et la plaque de refroidissement 3 sont assemblés sur l'empreinte 4. Lesdites gorges 8 sont obtenues par fraisage de la face inférieure de ladite plaque de refroidissement 3 de telle manière que la distance séparant la face inférieure de l'empreinte 4, en contact avec la face supérieure de la plaque de refroidissement 3, du fond desdites gorges 8 de la plaque de refroidissement 3 soit inférieure ou égale à 5mm.

On observera que, dans cette variante d'exécution, l'évacuation de la chaleur accumulée s'effectue à travers les inserts 10 dont au moins l'un des flancs est en contact intime avec la plaque de refroidissement 3.

Par ailleurs, on notera que la distance séparant les flancs des inserts 10, en contact avec la plaque de refroidissement 3, du bord desdites gorges 8 de la plaque de refroidissement 3 est inférieure ou égale à 5mm.

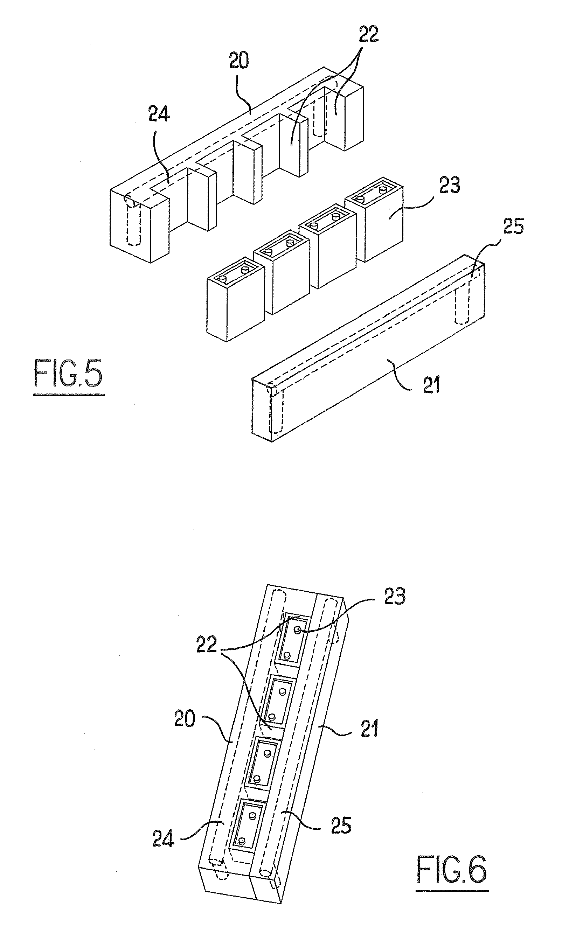

Selon une dernière variante d'exécution du moule conforme à l'invention, en référence aux figures 5 et 6, ledit moule comporte deux pièces de refroidissement 20 et 21, une première pièce de refroidissement 20 constituée d'une plaque globalement parallélépipédique comportant sur l'une de ses parois des cannelure 22 aptes à recevoir la ou les empreintes 23 du moule et une seconde pièce de refroidissement 21 complémentaire constituée d'une plaque globalement parallélépipédique apte à être assemblée avec la première pièce de refroidissement 20 de telle manière que lesdites empreintes 23 soient en contact avec les deux pièces de refroidissement 20 et 21.

Chacune des pièces de refroidissement 20 et 21 comporte au moins un canal de refroidissement 24 et respectivement 25 dans lesquels est apte à circuler un fluide caloporteur.

Par ailleurs, chacune des pièces de refroidissement 20 et 21 est obtenue dans matériau thermo conducteur et de préférence dans un alliage de cuivre apte à supporter les contraintes de compression appliquées sur le moule à chaque cycle.

De plus, chacune des pièces de refroidissement 20 et 21 est obtenue suivant un procédé permettant d'éliminer les déformations de ladite plaque après usinage tel que décrit précédemment.

On comprend bien que contrairement aux moyens de refroidissement des moules de l'art antérieur, le procédé et le moule mettant en oeuvre le procédé permet d'assurer une régulation thermique sous les inserts soit lors de la création du moule soit lors de sa modification ou de sa réparation avec un coût de revient faible.

De plus, le procédé suivant l'invention sera particulièrement avantageux pour des pièces injectées de moyen et gros volume. En effet, il favorise le retrait des pièces, permet une homogénéisation de la température sur toute la surface de l'empreinte du moule, évite la déformation des pièces, diminue le temps de cycle et permet de réduire l'apparition de défauts d'aspect sur les pièces.

Enfin, il va de soi que le procédé suivant l'invention et le moule mettant en oeuvre ledit procédé pourra être adapté à des moules à 2 ou 3 plaques notamment et que les exemples que l'on vient de donner ne sont que des illustrations particulières en aucun cas limitatives quant aux domaines d'application de l'invention.

## Revendications

1. Procédé de refroidissement d'une empreinte (4) d'un moule pour la fabrication d'une pièce plastique injectée **caractérisé en ce qu'**il consiste à faire circuler un fluide caloporteur dans une pièce dite de refroidissement (3) constitué d'une plaque dont une première face dite d'échange est au contact de l'empreinte (4) et dont la face opposée dite de refroidissement comporte au moins un canal (18) d'écoulement du fluide caloporteur, et un joint (2) venant coiffer la face de refroidissement, ledit joint (2) étant maintenu en position sur la face de refroidissement par une plaque dite porte-joint (1) afin d'assurer l'étanchéité du circuit de refroidissement.

2. Procédé suivant la revendication 1 **caractérisé en ce que** la pièce de refroidissement (3) est obtenue dans un matériau thermo-conducteur.

3. Procédé suivant la revendication 2 **caractérisé en ce que** la pièce de refroidissement (3) est obtenue dans du cuivre.

4. Procédé suivant l'une quelconque des revendications 1 à 3 **caractérisé en ce que** le fluide caloporteur est de l'eau.

5. Moule pour la fabrication d'une pièce plastique injectée comportant au moins une empreinte (4) et au moins une pièce dite de refroidissement (3) dans laquelle est apte à circuler un fluide caloporteur **caractérisé en ce que** la pièce de refroidissement (3) consiste en une plaque dont une première face dite d'échange est au contact de l'empreinte (4) et dont la face opposée dite de refroidissement comporte au moins un canal (8) d'écoulement du fluide caloporteur, et en un joint (2) venant coiffer la face de refroidissement, ledit joint (2) étant maintenu en position sur la face de refroidissement par une plaque dite porte-joint (1) afin d'assurer l'étanchéité du circuit de refroidissement.

6. Moule suivant la revendication 5 **caractérisé en ce que** la pièce de refroidissement (3) est obtenue dans un matériau thermo-conducteur.

7. Moule suivant la revendication 5 **caractérisé en ce que** la pièce de refroidissement (3) est obtenue dans du cuivre.

8. Moule suivant l'une quelconque des revendications 5 à 7 **caractérisé en ce qu'**il comporte au moins un insert (10) traversant la pièce de refroidissement (3) et l'empreinte (4), ledit insert (10) étant en contact intime avec la pièce de refroidissement (3).
